# EUROPEAN PATENT APPLICATION

(11) **EP 0 650 661 A2**
(43) Date of publication of application: **03.05.1995**
(21) Application number: 95200253.3
(22) Date of filing: 20.07.1990
(51) Int. Cl.: A01C 17/00, A01C 15/00

(54) **A machine for spreading material**

(30) Priority: 24.07.1989 NL 8901903
(62) Divisional of application: 90201973.6
(71) Applicant: C. van der Lely N.V., NL-3155 PD Maasland (NL)
(72) Inventor: van der Lely, Cornelis, CH-6300 Zug (CH)
(74) Representative: Mulder, Herman

(57) **Abstract**

A machine for spreading material, more specifically granular and/or pulverulent material such as artificial fertilizer, which machine comprises a frame (1), a storage bin (2, 75) for the material to be spread and at least one spreader member (13, 14, 79, 80). The machine includes a measuring device (26, 65, 101) for measuring at least part of the material to be spread. The measuring device (26, 65, 101) is coupled to an electronic mechanism, which electronic mechanism is such that as fixed values can be keyed thereinto the spreading width and the desired quantity of material to be spread per surface unit, which values can be compared in the electronic mechanism with the variable values of the measuring device (26, 65, 101) and the rate of operative travel of the machine to be keyed thereinto, the arrangement being such that the desired quantity of material per surface unit is spread by controlling the adjusting member (34) for the dosing member (32) by means of the variable values fed into the electronic mechanism.

## Description

The invention relates to a machine for spreading material, more specifically granular and/or pulverulent material such as artificial fertilizer, which machine comprises a frame, a storage bin for the material to be spread and at least one spreader member, whereby the machine includes a measuring device for measuring at least part of the material to be spread.

A machine of this kind is known from EP-A 0 287 165.

It is an object of the invention to improve a machine of the above-defined type. According to the invention, the measuring device is coupled to an electronic mechanism, which electronic mechanism is such that as fixed values can be keyed thereinto the spreading width and the desired quantity of material to be spread per surface unit, which values can be compared in the electronic mechanism with the variable values of the measuring device and the rate of operative travel of the machine to be keyed thereinto, the arrangement being such that the desired quantity of material per surface unit is spread by controlling the adjusting member for the dosing member by means of the variable values fed into the electronic mechanism.

For a better understanding of the present invention and to show how the same may be carried into effect, reference will now be made, by way of example, to some embodiments of the machine shown in the accompanying drawings, in which:
Figure 1 is a rear view of a machine according to the invention;
Figure 2 is, to an enlarged scale, a cross-sectional view taken in the line II - II in Figure 1 of part of the machine;
Figure 3 is a plan view of part of the machine in the direction of the arrow III in Figure 2;
Figure 4 is a rear view of a further embodiment of the machine according to the invention;
Figure 5 is a side view of the machine of Figure 4, seen in the direction of the arrow V in Figure 4;
Figure 6 is a rear view of a still further embodiment of the machine according to the invention;
Figure 7 is a cross-sectional view of part of the machine shown in Figure 6, taken on the line VII - VII in Figure 6, and
Figure 8 is a plan view of part of the machine shown in Figures 6 and 7, seen in the direction of the arrow VIII in Figure 7.

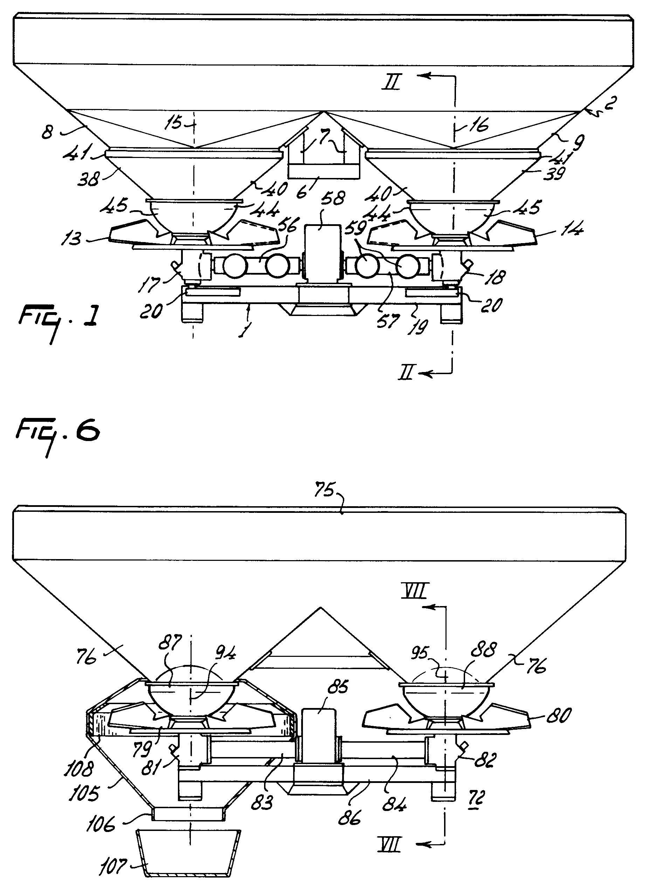

The embodiment of the machine according to the invention as shown in Figures 1, 2 and 3 comprises a frame 1 having fastened thereto a storage bin 2. The frame 1 includes a vertical frame portion 3 having attached thereto coupling members 4 for coupling the machine to the lifting hitch of a tractor or a suchlike vehicle. The upper end of the frame portion 3 includes an upper beam 5 having fastened thereto the storage bin 2. In addition, the frame portion 3 is provided with a carrier 6 which, during operation, extends rearwardly relative to the direction of operative travel 10. At the end of the carrier 6 there are mounted upwardly extending supports 7. The supports 7 support the storage bin in its centre and are contiguous to the facing walls of two discharge nozzles 8 and 9 of the storage bin. The discharge nozzles 8, 9 are spaced apart and are arranged transversely to the direction of operative travel 10 of the machine.

Below each of the discharge nozzles 8, 9 there is arranged a spreader member 13 or 14, respectively. The spreader members 13, 14 are supported rotatably about rotary axes 15, 16 by gear housings 17, 18. The gear housings 17, 18 are supported by a horizontal frame portion 19 which extends rearwardly from the frame portion 3. The frame portion 19 includes two (non-shown) frame beams which are arranged in the shape of a V and are intercoupled by a carrier beam 20. In this embodiment, the gear housings 17, 18 bear on the carrier beam 20 of the horizontal frame portion 19.

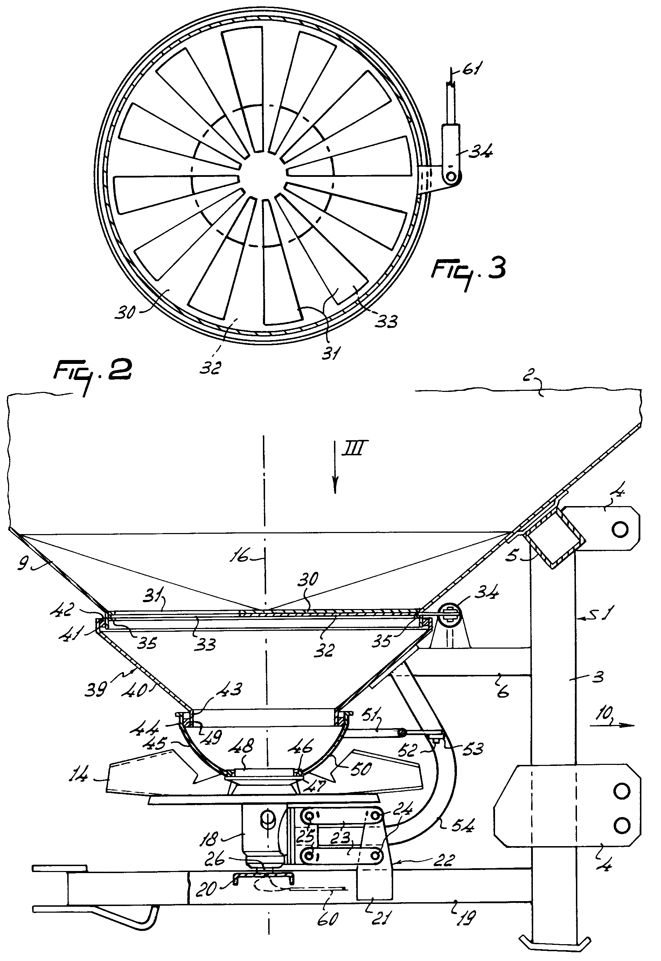

As is shown for the gear housing 18 in Figure 2, each of the gear housings 17, 18 is connected pivotably by means of a parallelogram structure 22 to a support 21 which is connected rigidly to the frame portion 19. The pivotal parallelogram structure 22 includes two parallel arms 23, which are connected to the support 21 via pivot pins 24 and to the housing 18 via pivot pins 25.

Each of the gear housings 17, 18 bears on the carrier beam 20 via a measuring device 26 which, in this embodiment, is fastened to the carrier beam 20. In this embodiment, the measuring device 26 constitutes a weighing device which includes a piezoelectric element. As is shown in Figure 2 for the discharge nozzle 9, each of the discharge nozzles 8, 9 has a wall, a round wall in this embodiment, which forms a bottom 30 of the storage bin 2. The bottoms 30 are identical to each other and each bottom 30 is provided with discharge apertures 31 which, in this embodiment, are arranged in the form of a star around the centre line thereof, the arrangement being such that they are distributed uniformly around the centre of the round bottom and together cover approximately half the bottom surface area. In this embodiment there are provided twelve apertures 31. Dosing members 32 are mounted against the bottom side of the bottoms 30. The dosing members 32 are indentical and are formed substantially in the same manner as the bottoms 30. The dosing members have feed-through apertures 33, the number and shape of which are equal to those of the discharge apertures 31, the arrangement being such that the feed-through apertures 33 can fully coincide with the apertures 31. The dosing members 32 are connected to adjusting and locking members 34 which bear on the carrier 6. The lower ends of the discharge nozzles 8, 9 are provided with cylindrical supporting edges 35 which project below the dosing members 32.

Between the lower ends of the discharge nozzles 8, 9 and the spreader members 13, 14 positioned therebelow there are arranged intermediate members 38, 39, respectively, which constitute guide members for guiding the material flowing through the discharge apertures 31 to the relevant spreader member. The intermediate members 38, 39 are identical and their construction will be described in further detail with reference to Figure 2 in respect of the intermediate member 39.

The intermediate member 39 comprises a downwardly converging funnel 40 having a cylindrical upper edge 41. The upper edge 41 is contiguous to the lower side of the storage bin 2, which lower side is provided with the discharge apertures 31, and is located around the edge 35. Between the edges 35 and 41 there is aranged a sealing ring 42 which is connected to either thereof and, preferably, is made of elastic material. The lower end of the funnel 40 has a cylindrical rim 43, which is located within a cylindrical rim 44 of a cup-shaped feed member 45. Between the rims 43 and 44 there is arranged a sealing ring 49 which, preferably, is made of a flexible material and is fastened only to either rim 43 or 44. By means of its lower edge 46, the cup-shaped feed member 45 bears on a supporting edge 47 of the spreader member 14. The lower edge 46 is positioned around a centring disc 48 which is connected rigidly to the spreader member 14. The funnel 40 and the cup-shaped feed member 45 are arranged concentrically about a centre line which coincides with the axis of rotation 16 of the spreader member 14. The axis of rotation 16 furthermore constitutes the centre line of the discharge nozzle 9. Similarly, the axis of rotation 15 of the spreader member 13 constitutes the centre line of the discharge nozzle 8, the intermediate member 38 being arranged centrically about the axis of rotation 15. The centring disc 48 is arranged centrically about the axis of rotation 16. The feed member 45 is provided with one or more feed apertures 50, the lower edges of which, in this embodiment, are located near the lower edge 46 of the feed member 45. The cup-shaped feed member 45 includes a locking arm 51 which is fastened thereto, preferably with some degree of movement. The end of the locking arm 51 that is remote from the feed member 45 is provided with a locking pin 52 which fits in an aperture in a lug 53. The lug 53 is connected rigidly to a carrier bracket 54 positioned between the funnel 40 and the gear housing 18, the arrangement being such that the funnel 40 is supported by the gear housing 18.

In a manner not shown in further detail, the spreader members 13, 14 are connected to shafts which are bearing-supported in the gear housings and are coupled by means of transmission members constituted by bevel gearwheels to the respective drive shafts 56 and 57. The drive shafts 56, 57 are coupled to transmission members in a gear box 58 which is connected rigidly to the carrier beam 20. As is apparent from Figure 1, each of the drive shafts 56, 57 is provided with two couplings 59 in such a manner that the gear housings 17, 18 are capable of upward movement relative to the gear box 58. In a manner not shown in further detail, the gear box 58 is provided with transmission members which are coupled to a shaft which projects from the gear box 58 at its leading side and can be coupled by means of an intermediate shaft to the power take-off shaft of a tractor or a similar vehicle carrying the machine.

During use, the machine is carried by a tractor or a suchlike vehicle, the machine being coupled to e.g. the three-point lifting hitch of a tractor by means of the coupling members 4. On coupling of the machine to the tractor, the power take-off shaft of the tractor is coupled via an intermediate shaft to the described coupling shaft which is connected to the transmission members in the gear box 58. The machine is used for spreading material over a surface area, more specifically for spreading granular and/or pulverulent material such as artificial fertilizer, over agricultural fields. For this purpose the machine is moved along by the tractor over the surface area during operation, the machine spreading the material over a strip thereof. During operation, the material to be spread is carried along in the storage bin 2 and from thence is fed to the spreading members 13, 14. In order to be able to spread the material, the spreading members 13, 14 are induced to rotate in the desired direction about the rotary axes 15 and 16. The drive is effected from the tractor, via the intermediate shaft and the transmission members in the gear box 58, by the respective transmission shafts 56, 57 and the transmission members in the gear housings 17, 18. In order to obtain a normal spread of the material, the setting of the machine and the rotation of the spreading members are such that the material is spread equally far to either side of the longitudinal axis of the machine.

The quantity of material spread per unit of time and/or per surface unit of the surface area to be spread can be adjusted by opening the discharge apertures 31 in the bottoms 30 of the discharge nozzles 8, 9 of the storage bin to a greater or lesser extent. This can be done by moving the dosing member 32 about the respective rotary axis 15 or 16 relative to the respective bottom. As a result, the feed-through apertures 33 can coincide with the apertures 31 to a greater or lesser extent. This movement can be set by means of the adjusting member 34, while, in addition, by means thereof the dosing member can be locked in the desired position relative to the relevant bottom. The material flowing through the more or less open discharge apertures from the storage bin to the relevant intermediate member 38, 39, flows via the intermediate member and the feed apertures 50 in the relevant cup-shaped feed member 45 to the relevant spreader member 13, 14. The location of the feed apertures 50 about the relevant rotary axis 15, 16 determines the position where the material is fed to the spreader member, seen relative to the rotary axis and the direction of operative travel 10. This feed position determines the direction in which the material is spread by the relevant spreader member in dependence on the shape of the spreader member and the speed of rotation imparted thereto during operation. If so desired, the position of the feed apertures 50 about the relevant rotary axis 15, 16 can be set by moving the relevant cup-shaped member 45 about the relevant rotary axis by means of the locking arm 51. For this purpose the lug 53 can be provided with a plurality of apertures, into one of which the pin 52 can be inserted at option.

In dependence on the quantity of material to be spread per surface unit and in dependence on the rate of travel of the machine, the quantity of material present in the relevant intermediate member 38, 39 and on the relevant spreader member 13, 14 will be greater or smaller. When e.g. a large quantity of material has to be spread per surface unit, the discharge apertures will be completely or almost completely open. As a result, a comparatively large quantity of material will flow per unit of time through the discharge apertures to the relevant intermediate member 38, 39, which discharge apertures, in this embodiment, are distributed uniformly around the centres of the bottoms 30 and are twelve in number. This material is fed from the intermediate member via the feed apertures 50 to the relevant spreader member 13, 14 and is spread substantially from the circumference thereof. Since the material requires a certain amount of time to move through the intermediate member and over the relevant spreader member, a given quantity of material will always be present in the intermediate member and on the spreader member. The quantity of material present in the intermediate member and on the spreader member will be greater or smaller in dependence on the extent to which the discharge apertures 31 have been opened. In accordance with the invention, the quantity of material, or its weight, contained per unit of time in the intermediate member and on the spreader member is used as an indication to establish whether the desired quantity of material is spread per unit of time in order to achieve a spread of the material in a desired quantity over a surface unit. For this purpose the intermediate member cum relevant spreader member is connected capably of movement in height to the bottom side of the relevant discharge nozzle 8, 9. Since the funnel-shaped portion 40 is connected to the relevant gear housing 17, 18 via the carrier bracket 54 and the cup-shaped feed member 45 is supported by the relevant spreader member 13, 14, the assembly consisting of the intermediate members 38, 39, the spreader members 13, 14 and the relevant gear housing 17, 18 is carried by the weighing device 26.

Each intermediate member cum spreader member and gear housing has a fixed weight, which weight, plus that of the quantity of material present in the intermediate member and on the spreader member, is weighed by the weighing device 26. In other words, the weight bearing on the weighing device consists of a constant portion formed by the intermediate member, the spreader member and the gear housing, and a variable portion formed by the varying quantity of material present in the intermediate member and on the spreader member. Depending on the quantity of material intended to be spread at a given rate of travel in order to obtain the desired quantity of material per surface unit, the quantity of material present in the intermediate member and on the spreader member may vary. At a given rate of operative travel and at a given setting of the discharge apertures 31 in order to achieve the spread of the desired quantity of material per surface unit, however, the quantity of material present in the intermediate member and on the spreader member will always be constant. Thus, an indication as to the spread of the material per unit of time or per surface unit to be spread can be furnished by the weighing device 26. By means of cables 60 the weighing device 26 is connected to a (non-shown) member, e.g. an electronic mechanism, which may be located in the cab of the tractor. Via cables 61 the electronic mechanism or similar other mechanism can be coupled to the adjusting member 34, the arrangement being such that there is an automatic control of the desired quantity of material present in the intermediate member 39 and on the spreader member 14, or of the quantity of material that is spread per unit of time and/or per surface unit. As constant values may be entered into the electronic or other control mechanism the quantity of material intended to be spread per surface unit and the spreading width of the machine. In addition, as variable values may then be entered the indication from the weighing device 26 as to the weight of the quantity of material present in the intermediate member and on the relevant spreader member and the rate of operative travel of the machine. Thus it is possible to achieve that, when the rate of travel is increased, the apertures are opened to a further extent, whereas, when the rate of travel is decreased, the apertures are automatically closed to a greater or lesser extent in order to obtain a spread of the material in the desired quantity over a surface unit.

According to the inventive idea, in order to be able to obtain the desired indication from the measuring device 26, the relevant intermediate member, the spreader member and the gear housing bear on the weighing device. Due to the relevant parallelogram structures 22 between the gear housings 17, 18 and the frame as well as due to the couplings 59 in the drive shafts 56, 57, the assembly supported by the weighing device 26 bears substantially freely thereon. In this embodiment, the weighing operation is influenced advantageously in that the weighing device is located in the middle below the centre of gravity of the machine portion to be weighed together with the material present therein and thereon. In a vertical position of the machine, the measuring device 26 is located substantially on the vertical line including the centre of gravity of the machine portion to be weighed and that of the material present therein and thereon, during operation.

The weight indications obtained from the weighing devices 26 below the respective gear housings 17, 18 may be kept apart and may be displayed on a screen or other display element to the driver of the tractor or of the machine, so that it will be possible to establish whether each of the spreader members performs its required function. Thereafter, the values supplied by the weighing devices 26 may be added together in order to be able to determine and display to the driver whether the desired quantity of material is spread per surface unit. The separate display of the indications supplied by the measuring devices 26 can provide an indication as to the distribution of the material over the strip onto which the material is spread by the spreader members 13, 14, during travel of the machine. The inventive idea can be applied both in machines wherein each of the two spreader members 13, 14 spreads the material substantially to one side relative to the longitudinal axis of the machine, and in machines of such a construction that the spreader members 13, 14 both spread the material over equal distances on either side relative to the longitudinal axis of the machine, the arrangement being such that the spread patterns formed by the two spreader members overlap substantially completely.

According to the invention, it is alternatively possible to combine the two spreader members 13, 14, the relevant intermediate members 38, 39 and the gear housings 17, 18 to form an integral whole. This integral whole can be capable of upward movement as one assembly relative to the storage bin and the frame and can be supported by e.g. one single weighing device. In such an embodiment, the gear housing 58 may be implemented from intermediate sections comprising the drive shafts 56, 57 as one rigid whole with the gear housings 17, 18. Then, it may be possible to provide one weighing device below the gear box 58, so that via this single weighing device an indication will be obtained as to the quantity of material present in the two intermediate members 38, 39 and on the two spreader members 13, 14, all this in accordance with the features described for the embodiment shown.

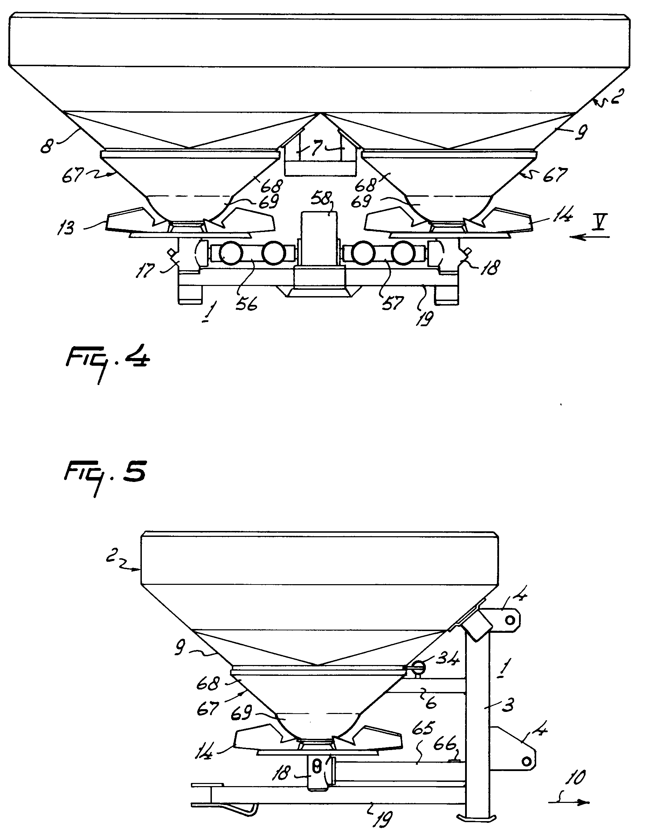

Figures 4 and 5 show an embodiment which to a large extent corresponds to that shown in Figures 1 to 3. In Figures 4 and 5, the component parts which correspond to those occurring in Figures 1 to 3 have been denoted by the same reference numerals. The embodiment of Figures 4 and 5 has a structure which, compared with Figures 1 to 3, only differs as regards the measuring device which is in the form of a weighing device and the intermediate members between the discharge nozzles 8, 9 and as regards the spreader members 13, 14. In the embodiment shown in Figures 4 and 5, the intermediate member cum spreader members and the gear housings on which the spreader members are provided, are not supported by a weighing device on which the bottom side of the gear housing bears, but by a weighing arm via which the gear housing is connected to the frame 1. In this embodiment, the sag of the weighing arm 65 serves as an indication as to the measurement of the weight of the intermediate member, the spreader member, the gear housing and the material present therein and thereon, respectively. To this end, the weighing arm 65 is provided with a weighing device which includes a strain gauge 66 arranged thereon. The distortion of the weighing arm is measured by the strain gauge and is used as a measure for weighing the relevant machine parts and the material to be spread and present therein and thereon. In this embodiment, between the discharge nozzles 8, 9 and the respective spreader members 13, 14 there are arranged intermediate members 67 which, as regards shape, are very closely similar to the respective intermediate members 38, 39. Consequently, each of the intermediate members 67 has a funnel-shaped portion 68 and a cup-shaped portion 69 arranged therebelow. In this embodiment, however, the funnel-shaped portion 68 and the cup-shaped portion 69, which is substantially in the form of a half-sphere, are formed as an integral whole. Thus, the funnel-shaped portion cum cup- shaped portion bear on a supporting edge 47 of the relevant spreader member as an integral whole. Like the funnel-shaped portion 40, the upper side of the funnel-shaped portion 68 of the intermediate member 67 has a raised cylindrical edge 41 which fits around a supporting edge 35 of the relevant discharge nozzle, a sealing material, e.g. the sealing ring 42, being present therebetween. Since the cup-shaped portion 69 bears on a suporting edge 47 which co-rotates with the spreader member, the embodiment shown in Figures 4 and 5 is provided with (non-shown) means, such as the arm 51 in Figure 2, which prevent the intermediate member 67 from co-rotating with the relevant spreader members about their respective rotary axes 15, 16.

Like the machine in the previous embodiment, the machine shown in Figures 4 and 5 is used in particular for spreading material over agricultural fields. During travel of the machine over a surface area to be spread, the material is spread in such a way that it is strewn equally far to either side of the longitudinal axis of the machine. The strain gauge 66 measures the extent to which the weighing arm 65 sags under the weight of the various component parts carried thereby and the material present in and/or on those component parts, such as the intermediate member 67 and the respective spreader members 13, 14. The extent of sag furnishes an indication as to the weight of the intermediate member 67, the relevant spreader member and the material therein and thereon. This weight measurement serves as an indication whether the desired quantity of material is spread per unit of time and/or per surface unit. Like in the previous embodiment, the result of this measurement can be used to control the size of passage of the discharge apertures 31 in the bottom side of the discharge nozzles 8, 9 in such a manner that a constant quantity of material is spread per surface unit.

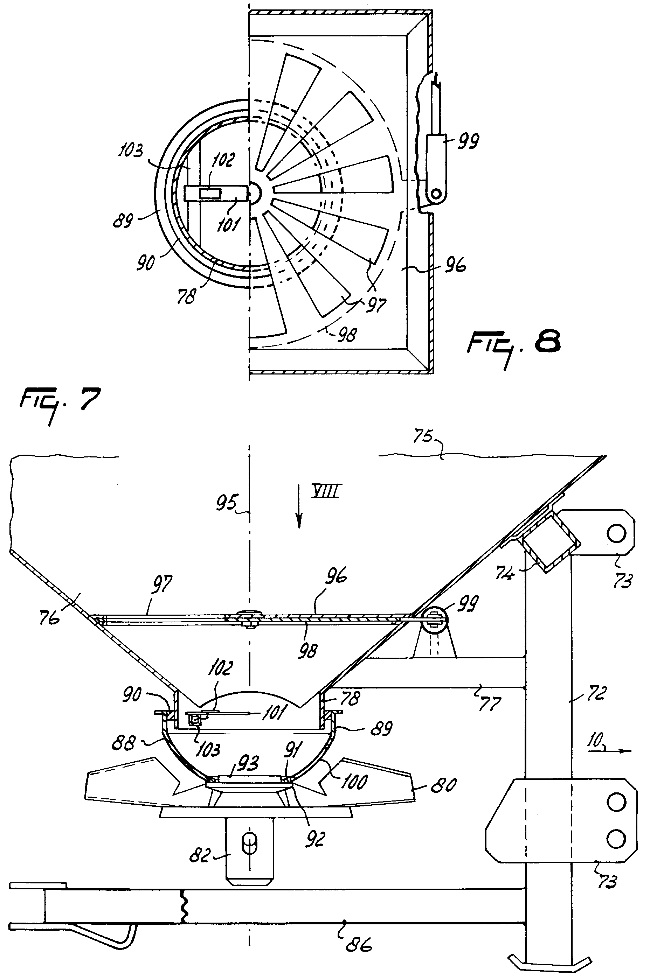

Figures 6, 7 and 8 illustrate a further embodiment of a machine according to the invention. This machine comprises a frame 72 which substantially corresponds to the frame 1 of the first embodiment and, for this reason, will not be described in further detail. The frame 72 has coupling members 73, by means of which the machine can be coupled to the lifting hitch of a tractor or a suchlike vehicle. The frame includes an upper beam 74 having fastened thereto a storage bin 75. The storage bin has two discharge nozzles 76 which, like in the previous embodiments, are located transversely to the direction of operative travel 10 of the machine on either side of the longitudinal axis thereof. The storage bin 75 is additionally supported, via the discharge nozzles 76, by a carrier beam 77 which extends rearwardly from the vertical frame portion of the frame 72 and is contiguous to the facing sides of the discharge nozzles, as is shown in Figure 6. The discharge nozzles have cylindrical discharge ends 78 (Figure 7), below which spreader members 79, 80 are provided. The spreader members 79, 80 are mounted on (non-shown) shafts which are bearing-supported in gear housings 81 and 82, respectively. The gear housings 81, 82 are connected rigidly to intermediate members 83, 84 which, in their turn, are attached to a gear box 85. The transmission members in the gear box 85 are coupled via drive shafts arranged in the intermediate members 83, 84 to the transmission members in the gear housings 81 and 82. The assembly, consisting of the gear housings 81, 82, the intermediate members 83, 84 and the gear box 85, is attached to and supported by a frame portion 86 which is not shown in further detail.

Between the lower end 78 of each discharge nozzle and the relevant spreader member 79, 80 there are arranged intermediate members 87 and 88, respectively. Like the members 45 in the first embodiment, the intermediate members 87, 88 are of a spherical shape and are each provided with at least one feed aperture 100. As is shown in further detail in Figure 7, the intermediate members 87, 88 have cylindrical upper edges 89 which embrace the lower ends 78 of the discharge nozzles. Between the lower ends 78 and the upper edge 89 there is provided a, preferably flexible, sealing ring 90 which, preferably, is only connected either to the lower end 78 or to the edge 89. By means of its lower edge 91, the intermediate member 88 bears on a supporting edge 92 of the relevant spreader member 79, 80. The lower edge 91 is centred relative to the axis of rotation 94, 95 of the relevant spreader member by means of a centring disc 93 attached to the spreader member.

At some distance above the lower ends 78, the discharge nozzles 76 are provided with walls 96 which are in the form of bottoms and in which slotted discharge apertures 97 have been made. Like in the previous embodiments, also in this embodiment the discharge apertures 97 are distributed uniformly around the centre line of the discharge nozzles and of the bottom 96. Like in the preceding embodiments, the bottom 96 includes twelve discharge apertures. Near the bottom and, in this embodiment, against the lower side thereof, there is provided a dosing member 98. This dosing member is provided with feed-through apertures, which apertures are equal to the discharge apertures 97. The dosing member 98 is mounted such that the feed-through apertures can optionally be aligned completely or partly with the discharge apertures 97. For this purpose, the dosing member 98 can be adjusted by means of an adjusting member 99. With the aid of the adjusting member 99, the dosing member 98 can also be locked in a predetermined position. The intermediate member 88 is provided with one or more apertures 100, through which the material can be fed therefrom to the relevant spreader member. The feed apertures 100 are provided such in the intermediate member that the material, like in the preceding embodiments, is supplied eccentrically relative to the relevant axis of rotation in the desired position to the relevant spreader member with respect to the rotary axis of the spreader member and the direction of operative travel 10 of the machine. Like the embodiment shown in Figures 1 to 3, the intermediate member 88 is prevented by means of a locking member, e.g. the locking arm 51, from co-rotating to a greater or lesser extent with the spreader member. If desired, the intermediate member 88 can optionally be adjusted to one out of a plurality of positions and be locked in that position relative to the frame by means of the locking member, the arrangement being such that the material is fed to the spreader member in the desired location.

In the space between the bottom 96 and the feed apertures 100 in the intermediate member there is provided a measuring device 101. In this embodiment, the measuring device is attached to a carrier beam 103 which is fastened in the lower edge 78 of the discharge nozzle 76. In this embodiment, the measuring device 101 consists of a measuring arm, on the upper side of which there is arranged a strain gauge 102. The measuring device obtains its measuring values from the sag of the measuring arm, which sag is measured by means of the strain gauge 102.

During operation, the machine is coupled to the lifting hitch of a tractor or a vehicle and moved across the surface over which the material is to be spread. The machine in accordance with this embodiment, too, has for its specific object to spread material, such as artificial fertilizer, over the soil. The material to be spread is carried along in the storage bin 75 and is supplied, during travel of the machine, to the relevant spreader members 79, 80 via the discharge nozzles. Like the spreader members in the preceding embodiments, these spreader members are induced to rotate about their rotary axes during operation, the arrangement being such that the material is spread in the desired manner as has been shown for the first embodiment. In this embodiment, by the measuring devices 101 is measured the quantity of material fed per unit of time to the spreader members from the storage bin. During the flow of the material through the discharge apertures 97, the measuring device 101 will be hit thereby and sag under the pressure of this flow of material. The extent of sag of the measuring arm then depends on the quantity of material which flows per unit of time through the discharge apertures 97 and lands on the measuring arm. When a greater quantity of material will be discharged through the discharge apertures per unit of time, this greater quantity will land on the measuring arm and will cause it to sag to a greater extent than when a smaller quantity of material flows through the discharge apertures 97 per unit of time. The extent of sag of the measuring arm is measured by the strain gauge 102 and thus there is obtained an indication as to the quantity of material fed per unit of time from the storage bin, via each discharge nozzle 76, to each of the respective spreader members 79, 80. Like in the preceding embodiments, the indication obtained by the strain gauge 102 may be transferred via a wiring system to e.g. an electronic mechanism which, preferably, is disposed near the driver. The data produced by the measuring devices can be displayed by the electronic mechanism for observation to the driver of the machine in such a way that this driver can establish whether the desired flow from the storage bin to the spreader members occurs and is maintained. Via wires, the electronic mechanism is connected to an adjusting member 99 which controls the dosing member 98. Preferably, the electronic mechanism is of such a structure that the dosing p1 j1
member is operable from this mechanism via the adjusting member 99 in such a manner that the discharge apertures may be opened or closed to a greater or lesser extent in dependence on a change in the rate of operative travel of the machine in order thus to achieve that the right quantity of material necessary to spread the desired quantity per unit of surface area flows per unit of time to the relevant spreader members 79, 80.

The quantity of material which flows from the storage bin per unit of time and is measured by the measuring device 101 can be checked still further by, for example, collecting the material spread by one of the spreader members to see how much material is spread per unit of time at a given setting of the discharge apertures. This check can be performed before the material is spread over the surface to be spread. In Figure 6, a collecting member 105 is provided around the spreader member 79. The collecting member includes a discharge nozzle 106 which ends over a collecting bin 107.

Prior to spreading material by means of the machine over the surface area to be spread, a test can be performed by providing the collecting member 105 around one of the spreader members. During a given period of time it is possible to collect, at the adjusted value for the size of free passage of the discharge aperture, the material flowing from the storage bin to the relevant spreader member and spread thereby. The measuring accuracy of the measuring device 101 can be checked by comparing the quantity of material collected in the collecting bin 107 during this test to the quantity measured by the measuring device 101. When the indication produced by the measuring device 101 and the quantity collected in the collecting bin 107 are in agreement, the spread of the material over the surface area to be spread can be effected. In case the measuring device 101 should display a value different from the actual quantity collected in the collecting bin 107, the measuring device can be readjusted such that it displays the proper value. The use of a measuring device 101 has the advantage that it is only the quantity of outflowing material that is measured; the measurement is not affected by the weight of e.g. further machine portions.

Prior to spreading the material over the surface area to be spread, the collecting member 105 around the spreader member 79 or 80 will be removed, and also the collecting bin 107. As will be apparent from Figure 6, the collecting member is suspended from the upper side of the intermediate member 87 during the test. It is, however, alternatively possible to provide the collecting member 105 in a different manner around the spreader member. A check on the measuring members in the embodiments according to Figures 1 to 5 is also possible by means of a collecting member 105 and the collecting bin 107. The use of a collecting member, like the member 105 arranged around the spreader member, has the advantage that the spreader member need not be removed prior to the test. In addition, the flow of material to the spreader member will be identical to the flow during operation of the machine. This provides a proper check prior to the actual spread of the material.

According to the invention, the collecting member is coated at the inner side of its walls, at least in the region where the material spread by the spreader member is thrown thereagainst, with such a flexible and/or shock-absorbing material 108 that the grains of the material spread remain intact. This renders a proper measurement possible. In addition, the material used during the test is then still suitable to be spread over the surface area to be spread.

The invention is not limited to the features described in the foregoing, but also relates to all the features shown in the accompanying drawings.

## Claims

1. A machine for spreading material, more specifically granular and/or pulverulent material such as artificial fertilizer, which machine comprises a frame (1), a storage bin (2, 75) for the material to be spread and at least one spreader member (13, 14, 79, 80), whereby the machine includes a measuring device (26, 65, 101) for measuring at least part of the material to be spread, characterized in that the measuring device (26, 65, 101) is coupled to an electronic mechanism, which electronic mechanism is such that as fixed values can be keyed thereinto the spreading width and the desired quantity of material to be spread per surface unit, which values can be compared in the electronic mechanism with the variable values of the measuring device (26, 65, 101) and the rate of operative travel of the machine to be keyed thereinto, the arrangement being such that the desired quantity of material per surface unit is spread by controlling the adjusting member (34) for the dosing member (32) by means of the variable values fed into the electronic mechanism.

2. A machine as claimed in claim 1, characterized in that the measuring device (26, 65, 101) co-operates with a machine portion (39, 78) having at least one discharge aperture (31, 97) for discharging the material from the storage bin to the spreader member (13, 14, 79, 80), the material being supplied thereto via this machine portion (39, 78).

3. A machine for spreading material as claimed in claim 1 or 2, characterized in that the storage bin (2, 75) has a wall (30, 96) provided with at least one discharge aperture (31, 97), via which the material is fed from the storage bin (2, 75) to the spreader member (13, 14, 79, 80), the discharge aperture (31, 97) in the storage bin wall (30, 96) being closeable to a greater or lesser extent.

4. A machine as claimed in any one of claims 1 to 3, characterized in that the machine comprises a machine portion (39), comprising a gear housing (17, 18) having accommodated therein transmission means for driving the spreader member (13, 14) and having same attached thereto capably of rotational movement, as well as an intermediate member (40, 45) occupying the space between the storage bin (2) and the spreader member (13, 14), via which space the material is fed from the storage bin (2) to the spreader member (13, 14).

5. A machine as claimed in any one of claims 1 to 4, characterized in that the machine portion (39), which contains the material flowing from the storage bin (2) and discharges same to the spreader member (13, 14), bears on a weighing device (26) independently of the machine frame (1).

6. A machine as claimed in claim 4 or claims 4 and 5, characterized in that the gear housing (17, 18), having attached thereto the spreader member (13, 14) capably of rotational movement, is hingeably connected to the frame (1) of the machine by means of a parallelogram construction,

7. A machine as claimed in any one of claims 2 to 6, characterized in that the spreader member (13, 14) and the machine portion (39) that feeds the material flowing from the storage bin (2) to the spreader member (13, 14) are connected to the frame (1) of the machine via a weighing arm (65).

8. A machine as claimed in any one of the preceding claims, characterized in that the frame portion (65), to which the spreader member (14) is connected, includes a strain gauge (66).

9. A machine as claimed in claim 7 or 8, characterized in that the weighing arm (65) is arranged between the frame (1) and the gear housing (17, 18), to which the spreader member (13, 14) is mounted.

10. A machine as claimed in any one of the preceding claims, characterized in that the measuring device (101) is accommodated in a machine portion (78, 88) which is contiguous to the storage bin wall (96) having at least one discharge aperture (97), via which machine portion (78, 88) the material flows from the storage bin (75) to the spreader member (80).

11. A machine as claimed in claim 10, characterized in that the measuring device (101) includes a flexible measuring arm provided with a strain gauge (102), by means of which can be measured the measuring arm sag caused by the weight of the material flowing from the storage bin (75).

12. A machine as claimed in any one of the preceding claims, characterized in that a collecting member (105) can be arranged around a spreader member (79) of the machine for collecting the material spread thereby during a check test.

13. A machine as claimed in claim 12, characterized in that the collecting member (105) is coated at its inner side, at least in the region where material is thrown against during the check test, with a flexible and/or shock-absorbing material (108).
